# EUROPÄISCHE PATENTANMELDUNG

(11) **EP 0 655 635 A1**
(43) Veröffentlichungstag der Anmeldung: **31.05.1995**
(21) Anmeldenummer: 94116679.5
(22) Anmeldetag: 22.10.1994
(51) Int. Cl.: G02B 21/06

(54) **Mikroskop mit Beleuchtungseinrichtung**

(30) Priorität: 25.11.1993 DE 9318048 U
(71) Anmelder: ESCHENBACH OPTIK GmbH + Co., D-90409 Nürnberg (DE)
(72) Erfinder: Henkelmann, Klaus, D-90552 Röthenbach (DE)
(74) Vertreter: Tergau, Enno, Dipl.-Ing.

(57) **Zusammenfassung**

Die Beleuchtungseinrichtung eines Mikroskopes (1) beleuchtet mit ihrer Lichtquelle (2) das Betrachtungsobjekt mit veränderlicher Beleuchtungsstärke und bündelt die Lichtstrahlen. Die Lichtquelle (2) ist zur Veränderung der Beleuchtungsstärke entlang der optischen Achse (10,11) bzw. des Strahlenganges der Beleuchtungseinrichtung verstellbar.

## Beschreibung

Die Erfindung betrifft ein Mikroskop mit den Merkmalen des Oberbegriffs des Anspruches 1.

Derartige Mikroskope weisen ein Stativ und einen daran höhenverstellbaren Objekttisch auf. Das Stativ besteht im wesentlichen aus einem Mikroskop-Fuß, einer Stativsäule und einem Objektivträger. Mikroskop-Fuß, Stativsäule und Objektivträger haben im wesentlichen eine U-Form, wobei der Objekttisch zwischen den beiden U-Schenken, also zwischen Mikroskop-Fuß und Objektivträger höhenverstellbar ist. Die Höhenverstellbarkeit erfolgt durch einen Höhenverstellantrieb innerhalb der Stativsäule.

Innerhalb des Mikroskop-Fußes befindet sich eine Beleuchtungseinrichtung, deren wesentlicher Bestandteil eine Lichtquelle ist. Die Lichtstrahlen werden über den Mikroskop-Fuß in die Blendenebene des Objekttisches übertragen. Die Beleuchtungseinrichtung weist eine Helligkeitsregelung auf, d.h. sie beleuchtet das Betrachtungsobjekt mit veränderlicher Beleuchtungsstärke.

Es ist bekannt, die Beleuchtungstärke durch Steuerung der Stromzuführung zu der Lichtquelle nach Art eines Dimmers zu verändern. Diese Helligkeitsregelung hat jedoch den Nachteil, daß sich die Farbtemperatur des Lichtes abhängig von der Helligkeit verändert. Dadurch entsteht im Betrachtungsobjekt ein Farbstich, so daß eine zufriedenstellende Betrachtung des Objektes nicht möglich ist. Diese Art der Helligkeitsregelung ist deshalb in vielen Fällen ungeeignet.

Aus **DE 35 38 774 C2** ist es bekannt, für die Helligkeitsregelung in der Beleuchtungseinrichtung eines Mikroskops eine Jalousie einzusetzen. Die Jalousie ist im Strahlengang zwischen der Lichtquelle und einer Mattscheibe angeordnet. Die Jalousie enthält eine Vielzahl von Lamellen, deren Neigungswinkel gegenüber der optischen Achse je nach erforderlicher Helligkeit bzw. Beleuchtungsstärke verändert wird. Die Jalousie ist jedoch eine aus vielen Einzelteilen kompliziert zusammengesetzte Funktionseinheit und dementsprechend störanfällig. Demzufolge sind auch die Wartungs- und Reparaturkosten dieser Beleuchtungseinrichtung hoch. Außerdem ist die effektive Lichtausbeute der Lichtquelle gering, da die Lichtstrahlen an den absorbierend wirkenden Lamellen reflektiert werden. Die Beleuchtungstärke kann deshalb von vornherein nur in einem sehr begrenzten Bereich verändert werden.

Der Erfindung liegt die Aufgabe zugrunde, für ein Mikroskop der eingangs genannten Art eine Regelung der Helligkeit bzw. der Beleuchtungsstärke zu schaffen, die eine Farbtemperaturänderung des Lichtes vermeidet und gleichzeitig einfach aufgebaut ist.

Diese Aufgabe wird durch die Merkmalskombination des Anspruches 1 gelöst.

Die Erfindung macht sich den bekannten formelmäßigen Zusammenhang zunutze, daß die Beleuchtungsstärke indirekt proportional zum Quadrat des Abstandes zwischen der Lichtquelle und einem beleuchteten Flächenstück ist. Die Beleuchtungsstärke wird deshalb einfach durch eine mechanische Abstandsverstelleinrichtung verändert. Die Lichtquelle ist z.B. an einem entlang der optischen Achse bzw. des Strahlenganges der Beleuchtungseinrichtung verschiebbaren Verstellschlitten befestigt. Eine derartige Verstelleinrichtung kann mit einfachen Hilfsmitteln aufgebaut werden und ist mechanisch sehr stabil. Die Lichtquelle selbst - z.B. eine Glühlampe - wird mit konstantem Strom betrieben, so daß der gesamte elektrische Aufwand für eine Stromsteuerung zur Helligkeitsregelung entfällt. Die erfindungsmäßige Beleuchtungseinrichtung ist deshalb kostengünstig sowie wartungs- und reparaturfreundlich aufgebaut.

Üblicherweise verläuft der das Betrachtungsobjekt beleuchtende Strahlengang etwa parallel zur Stativsäule in Höhenrichtung. Die Lichtquelle kann dann ebenfalls entlang dieses Strahlenganges in Höhenrichtung verstellt werden. Diese Verstellrichtung der Lichtquelle vergrößert jedoch oftmals in unerwünschter Weise die Bauhöhe des Mikroskop-Fußes und damit des gesamten Mikroskopes. Um dies zu vermeiden, schlägt Anspruch 2 vor, daß die Verstellrichtung der Lichtquelle gegenüber dem das Objekt beleuchtenden Strahlengang abgewinkelt ist. Im Scheitelbereich dieses Winkels ist ein Umlenkspiegel angeordnet, der die Lichtstrahlen der Lichtquelle in die erforderliche Richtung umlenkt. Durch Auswahl eines entsprechenden Umlenkspiegels sind die Lichtstrahlen der Lichtquelle beliebig umlenkbar. Dadurch kann die Verstellrichtung einer die Lichtquelle tragenden Abstandsverstelleinrichtung in die jeweils günstigste Raumrichtung verlegt werden. Dies ermöglicht den raumsparenden Einbau der Abstandsverstelleinrichtung in den Mikroskop-Fuß.

Bei einer Anordnung gemäß Anspruch 2 ist die Abstandsverstellbarkeit zwischen der Lichtquelle und dem Umlenkspiegel wirksam.

Gemäß Anspruch 3 wird der von der Lichtquelle ausgesandte Strahlengang an einem Umlenkspiegel um 90° umgelenkt. Folglich verlaufen die der Lichtquelle zugeordnete optische Achse und die dem umgelenkten Strahlengang zugeordnete optische Achse rechtwinklig zueinander. Somit wird die Lichtquelle etwa in horizontaler Richtung verstellt, wenn der umgelenkte Strahlengang etwa parallel zur Stativsäule in Vertikalrichtung verläuft. In Horizontalrichtung hat der Mikroskop-Fuß von vornherein eine beträchtliche Baulänge, um die Standfestigkeit des gesamten Mikroskopes zu gewährleisten. Die Abstandsverstelleinrichtung für die Lichtquelle kann deshalb ohne zusätzlichen Raumbedarf in ein herkömmliches Mikroskop eingebaut werden.

Anspruch 4 schlägt eine Sammellinse zur Anpassung der Strahlengeometrie an die Eigenschaften des Mikroskopes vor. Sie ist üblicherweise ortsfest im Mikroskop-Fuß fixiert.

Gemäß Anspruch 5 enthält die Beleuchtungseinrichtung ein lichtdurchlässiges Lichtstreu-Element. Dadurch ist eine mittelbare Lichtquelle geschaffen, die aus der Sicht des Objekttisches die eigentliche Lichtquelle darstellt. Sie sorgt für ein diffuses Streulicht und gewährleistet die gleichmäßige und vollständige Ausleuchtung des Betrachtungsobjektes. Das Lichtstreu-Element ist ebenfalls ortsfest im Mikroskop-Fuß eingebaut.

Die Ansprüche 6 und 7 betreffen bevorzugte Anordnungen von Sammellinse, Umlenkspiegel und Lichtstreu-Element für den Aufbau einer geeigneten Beleuchtungseinrichtung.

Anspruch 8 schlägt als Lichtstreu-Element eine herkömmliche Mattscheibe vor. Die Mattscheibe ist raumsparend in die Beleuchtungseinrichtung integrierbar.

Gemäß Anspruch 9 sind die Mattscheibe und der Umlenkspiegel durch eine halbkugelförmige Linse ersetzt. Dadurch ist der Bauteileaufwand der Beleuchtungseinrichtung reduziert. Die Montagezeit ist ebenfalls verkürzt, zumal auch eine zeitraubende Justierung des Umlenkspiegels zur exakten Ablenkung des Strahlenganges auf die Mattscheibe entfällt. Außerdem ist der Raumbedarf der für die Beleuchtungseinrichtung notwendigen Bauteile reduziert.

Der Erfindungsgegenstand wird anhand der in den Figuren dargestellten Ausführungsbeispiele näher erläutert. Es zeigen:
- Fig. 1: eine schematische Schnittdarstellung eines Mikroskop-Fußes mit der erfindungsgemäßen Beleuchtungseinrichtung
- Fig. 2: eine alternative Ausführungsform des Umlenkspiegels und der Mattscheibe für die Beleuchtungseinrichtung gemäß Fig. 1.

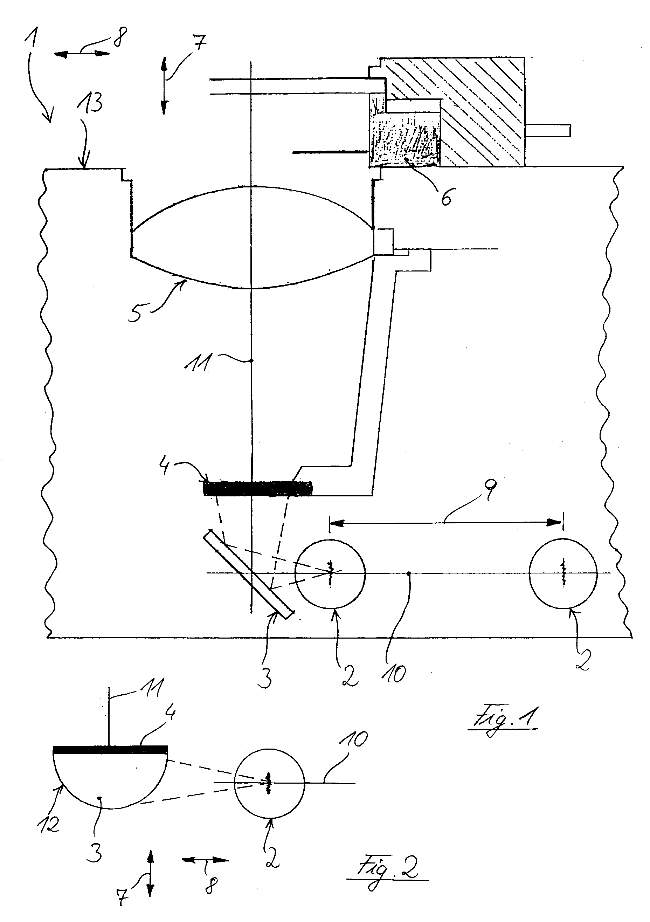

Die Beleuchtungseinrichtung eines Mikroskopes 1 ist im Mikroskop-Fuß 13 (Fig. 1) integriert. Die Beleuchtungseinrichtung enthält eine als Glühlampe ausgebildete Lichtquelle 2, einen als Planspiegel ausgestalteten Umlenkspiegel 3, eine Mattscheibe 4, eine asphärische Sammellinse 5 und für erhöhte Qualitätsanforderungen eine Feldblende 6 (Köhlersches Beleuchtungsverfahren).

Die Feldblende 6 und das Köhlersche Beleuchtungsverfahren sind jedoch nicht von erfindungswesentlicher Bedeutung.

In Vertikalrichtung 7 oberhalb des Mikroskop-Fußes 13 befindet sich der hier nicht dargestellte höhenverstellbare Objekttisch. Die ebenfalls nicht dargestellte Stativsäule verläuft in Vertikalrichtung 7. Rechtwinklig zur Vertikalrichtung 7, also in Horizontalrichtung 8 ist die Lichtquelle 2 zwischen zwei Extrempositionen verstellbar. Die beiden Extrempositionen begrenzen die Verstellstrecke der Lichtquelle 2 in Verstellrichtung 9. Die optische Achse 10 bzw. der Strahlengang der Lichtquelle 2 verläuft in Horizontalrichtung 8. Dieser Strahlengang wird durch den Umlenkspiegel 3 um 90° umgelenkt, so daß der umgelenkte Strahlengang bzw. die optische Achse 11 in Vertikalrichtung 7 verläuft und das nicht dargestellte Betrachtungsobjekt beleuchtet.

Die Abstandsverstellung der Lichtquelle 2 gegenüber dem ortsfesten Umlenkspiegel 3 verändert die Beleuchtungsstärke in der als mittelbare Lichtquelle wirksamen Mattscheibe 4 und somit auch in der Objektebene.

In einem weiteren, hier nicht dargestellten Ausführungsbeispiel ist die Lichtquelle 2 entlang der optischen Achse 11 verstellbar, so daß der Umlenkspiegel 3 entfällt. In diesem Fall wird der Abstand zwischen der Lichtquelle 2 und der Mattscheibe 4 verstellt.

Die Mattscheibe 4 befindet sich in dem das Objekt beleuchtenden Strahlengang zwischen dem Umlenkspiegel 3 und der Sammellinse 5. Die Scheibenebene der Mattscheibe 4 verläuft senkrecht zur optischen Achse 11.

Alternativ ist die Mattscheibe 4 einstückiger Bestandteil einer halbkugelförmigen Linse 12 (Fig. 2). Die plane Oberfläche der Linse 12 ist mattiert und deshalb als Mattscheibe 4 wirksam. Die optische Achse 11 bzw. der das Objekt beleuchtende Strahlengang verläuft lotrecht zur planen Oberfläche der Linse 12. Die halbkugelförmige Oberfläche der Linse 12 hingegen ist als Umlenkspiegel 3 wirksam und wird von der Lichtquelle 2 beleuchtet. In Fig. 2 wird die Lichtquelle 2 zur Veränderung der Beleuchtungsstärke ebenfalls in Horizontalrichtung 8 verstellt.

In einer weiteren, hier nicht dargestellten Ausführungsform ist die Lichtquelle 2 in Vertikalrichtung 7 der Mattscheibe 4 etwa gegenüberliegend unterhalb der Linse 12 angeordnet. Dabei ist die Lichtquelle 2 ebenfalls in Horizontalrichtung 8 verstellbar.

Sofern die Lichtquelle 2 - wie gerade beschrieben - der Mattscheibe 4 in Vertikalrichtung 7 etwa gegenüberliegt, ist es außerdem denkbar, die Lichtquelle 2 anstatt in Horizontalrichtung 8 in Vertikalrichtung 7 zu verstellen.

### Bezugszeichenliste

- 1: Mikroskop
- 2: Lichtquelle
- 3: Umlenkspiegel
- 4: Mattscheibe
- 5: Sammellinse
- 6: Feldblende
- 7: Vertikalrichtung
- 8: Horizontalrichtung
- 9: Verstellrichtung
- 10: Optische Achse
- 11: Optische Achse
- 12: Linse
- 13: Mikroskop-Fuß

## Patentansprüche

1. Mikroskop (1) mit einer Beleuchtungseinrichtung,
- deren Lichtquelle (2) das Betrachtungsobjekt mit veränderlicher Beleuchtungsstärke beleuchtet und
- die die Lichtstrahlen ausrichtet,
dadurch gekennzeichnet,
daß die Lichtquelle (2) entlang der optischen Achse (10,11) bzw. des Strahlenganges der Beleuchtungseinrichtung verstellbar ist.

2. Mikroskop nach Anspruch 1,
dadurch gekennzeichnet,
daß der das Objekt beleuchtende Strahlengang (11) und die Verstellrichtung (9) der Lichtquelle (2) einen Winkel bilden, in dessen Scheitelbereich ein Umlenkspiegel (3) den Strahlengang (10) umlenkt.

3. Mikroskop nach Anspruch 2,
dadurch gekennzeichnet,
daß die beiden optischen Achsen (10,11) rechtwinklig zueinander verlaufen.

4. Mikroskop nach einem der Ansprüche 1-3,
dadurch gekennzeichnet,
daß die Beleuchtungseinrichtung eine Sammellinse (5) zur Ausrichtung der Lichtstrahlen aufweist.

5. Mikroskop nach einem der Ansprüche 1-4,
dadurch gekennzeichnet,
daß der Lichtquelle (2) im Strahlengang ein lichtdurchlässiges Lichtstreu-Element nachgeschaltet ist.

6. Mikroskop nach Anspruch 5,
dadurch gekennzeichnet,
daß das Lichtstreu-Element zwischen der Lichtquelle (2) und der Sammellinse (5) zwischengeschaltet ist.

7. Mikroskop nach Anspruch 6,
dadurch gekennzeichnet,
daß das Lichtstreu-Element zwischen dem Umlenkspiegel (3) und der Sammellinse (5) zwischengeschaltet ist.

8. Mikroskop nach einem der Ansprüche 5-7,
dadurch gekennzeichnet,
daß das Lichtstreu-Element eine Mattscheibe (4) ist, die in einer zum Strahlengang senkrechten Ebene liegt.

9. Mikroskop nach einem oder mehreren der vorhergehenden Ansprüche,
gekennzeichnet durch
eine halbkugelförmige Linse (12),
- deren als Umlenkspiegel (3) wirksame halbkugelförmige Oberfläche von der Lichtquelle (2) beleuchtet ist und
- deren plane Oberfläche als Mattscheibe (4) wirksam in einer zum umgelenkten Strahlengang senkrechten Ebene liegt.
